# EUROPEAN PATENT APPLICATION

(11) **EP 4 503 800 A1**
(43) Date of publication of application: **05.02.2025**
(21) Application number: 22940780.4
(22) Date of filing: 22.12.2022
(51) Int. Cl.: H04W 72/04

(54) **DATA PROCESSING METHOD AND APPARATUS, AND COMPUTER-READABLE MEDIUM AND ELECTRONIC DEVICE**

(30) Priority: 06.05.2022 CN 202210486693
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: Reddie & Grose LLP
(86) International application number: PCT/CN2022/141126
(87) International publication number: WO 2023/213086

(57) **Abstract**

Provided in the embodiments of the present application are a data processing method and apparatus, and a computer-readable medium and an electronic device. The data processing method comprises: detecting a relationship between service data packets in a service flow; if it is detected that a set of service data packets having an association relationship is present in the service flow, generating indication information for the set of service data packets, wherein the indication information is used for indicating the characteristics of service data packets which are included in the set of service data packets; and sending the indication information for the set of service data packets to a core network element, so as to instruct the core network element to process the service data packets in the set of service data packets on the basis of the characteristics of the service data packets. The technical solution of the embodiments of the present application can improve the processing efficiency of service data packets.

## Description

### RELATED APPLICATION

This application claims priority to Chinese Patent Application No. 202210486693.4, entitled "DATA PROCESSING METHOD AND APPARATUS, COMPUTER-READABLE MEDIUM, AND ELECTRONIC DEVICE" filed on May 6, 2022, which is incorporated herein by reference in its entirety.

### FIELD OF THE TECHNOLOGY

This application relates to the field of computer and communication technologies, and specifically, to a data processing method and apparatus, a computer-readable medium, and an electronic device.

### BACKGROUND OF THE DISCLOSURE

In 5th-Generation (5G) and evolved 5G systems, high-bandwidth interactive services are an important type of services, such as cloud gaming, virtual reality (VR), augmented reality (AR), mixed reality (MR), extended reality (XR), and cinematic reality (CR).

These high-bandwidth interactive services not only require high transmission timeliness, but also have a greatly increased volume of data generated at an application layer, with the increase of resolution, frame rate, degree of freedom, and other indicators. In this case, the data packet content generated at the application layer of such services needs to be cut into a large quantity of data packet segments with a very low delay for transmission. Therefore, how to ensure efficient processing of data packets during segmented transmission is a technical problem that needs to be urgently resolved.

### SUMMARY

Embodiments of this application provide a data processing method and apparatus, a computer-readable medium, and an electronic device.

Other features and advantages of this application become clear through the following detailed descriptions or are partially learned through the practice of this application.

According to an aspect, an embodiment of this application provides a data processing method, including: detecting a relationship between service data packets in a service flow; generating, if it is detected that there is a service data packet set with associativity in the service flow, indication information for the service data packet set, the indication information indicating characteristics of service data packets included in the service data packet set; and transmitting the indication information for the service data packet set to a core network element, to indicate the core network element to process the service data packets in the service data packet set based on the characteristics of the service data packets.

The associativity indicates that the service data packets in the service data packet set have an association relationship.

According to an aspect, an embodiment of this application provides a data processing method, including: receiving indication information that is transmitted by an application-side network element and that indicates characteristics of service data packets included in a service data packet set, the indication information being transmitted by the application-side network element after it is detected that there is the service data packet set with associativity in a service flow; generating processing policy information for the service data packet set based on the indication information; and transmitting the processing policy information to a session management function, so that the session management function configures a processing policy for the service data packet set to another network element.

According to an aspect, an embodiment of this application provides a data processing apparatus, including: a detection unit, configured to detect a relationship between service data packets in a service flow; a generation unit, configured to generate, if it is detected that there is a service data packet set with associativity in the service flow, indication information for the service data packet set, the indication information indicating characteristics of service data packets included in the service data packet set; and a transmitting unit, configured to transmit the indication information for the service data packet set to a core network element, to indicate the core network element to process the service data packets in the service data packet set based on the characteristics of the service data packets.

According to an aspect, an embodiment of this application provides a data processing apparatus, including: a receiving unit, configured to receive indication information that is transmitted by an application-side network element and that indicates characteristics of service data packets included in a service data packet set, the indication information being transmitted by the application-side network element after it is detected that there is the service data packet set with associativity in a service flow; a generation unit, configured to generate processing policy information for the service data packet set based on the indication information; and a transmitting unit, configured to transmit the processing policy information to a session management function, so that the session management function configures a processing policy for the service data packet set to another network element.

According to an aspect, an embodiment of this application provides a computer-readable medium, having a computer program stored therein, the computer program, when executed by a processor, implementing the data processing method according to the foregoing embodiments.

According to an aspect, an embodiment of this application provides an electronic device, including: one or more processors; and a storage apparatus, configured to store one or more computer programs, the one or more computer programs, when executed by the one or more processors, causing the electronic device to implement the data processing method according to the foregoing embodiments.

According to an aspect, an embodiment of this application provides a computer program product, including a computer program, the computer program being stored in a computer-readable storage medium, and a processor of an electronic device reading the computer program from the computer-readable storage medium and executing the computer program, to enable the electronic device to perform the data processing method according to the foregoing optional embodiments.

In technical solutions provided in some embodiments of this application, when it is detected that there is the service data packet set with associativity in the service flow, the (application-side network element) generates the indication information for the service data packet set, and then transmits the indication information for the service data packet set to the core network element, to indicate the core network element to process the service data packets in the service data packet set based on the characteristics of the service data packets, so that the application-side network element and the core network element can implement processing on the service data packet set with associativity through interaction, which can ensure that the processing on the service data packet set can be adapted to a network resource state, and helps improve efficiency of processing service data packets.

The foregoing general descriptions and the following detailed descriptions are merely for illustration and explanation purposes, and are not intended to limit this application.

### BRIEF DESCRIPTION OF THE DRAWINGS

FIG. 1 is a schematic diagram of an exemplary system architecture to which the technical solutions in the embodiments of this application are applicable.
FIG. 2 is a schematic diagram of a transmission process of a multimedia data packet according to an embodiment of this application.
FIG. 3 is a flowchart of a data processing method according to an embodiment of this application.
FIG. 4 is a flowchart of a data processing method according to an embodiment of this application.
FIG. 5 is a flowchart of a data processing method according to an embodiment of this application.
FIG. 6 is a flowchart of a data processing method according to an embodiment of this application.
FIG. 7 is a block diagram of a data processing apparatus according to an embodiment of this application.
FIG. 8 is a block diagram of a data processing apparatus according to an embodiment of this application.
FIG. 9 is a schematic diagram of a structure of a computer system for implementing an electronic device according to an embodiment of this application.

### DESCRIPTION OF EMBODIMENTS

Exemplary implementations are described more thoroughly with reference to the accompanying drawings. However, the exemplary implementations may be implemented in a plurality of forms, and are not to be understood as being limited to the these examples. Conversely, these implementations are provided to make this application more comprehensive and complete, and comprehensively convey the idea of the exemplary implementations to a person skilled in the art.

In addition, features, structures, or characteristics described in this application may be combined in one or more embodiments in any appropriate manner. In the following descriptions, a lot of specific details are provided to give a comprehensive understanding of the embodiments of this application. However, a person skilled in the art is to be aware that the technical solutions in this application may be implemented without all detailed features in the embodiments. One or more particular details may be omitted, or another method, unit, apparatus, or operation may be used.

The block diagrams shown in the accompanying drawings are merely functional entities and do not necessarily correspond to physically independent entities. To be specific, these functional entities may be implemented in a software form, or these functional entities may be implemented in one or more hardware modules or integrated circuits, or these functional entities may be implemented in different networks and/or processor apparatuses and/or microcontroller apparatuses.

The flowcharts shown in the accompanying drawings are merely exemplary descriptions, do not need to include all content and operations/blocks, and do not need to be performed in the described orders either. For example, some operations/blocks may be further divided, while some operations/blocks may be combined or partially combined. Therefore, an actual execution order may change according to an actual case.

The term "plurality of" mentioned in this specification means two or more. The term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

With the development of 5G, many multimedia services that require a large data volume and a short delay are applicable, such as cloud gaming, VR, AR, MR, XR, and CR.

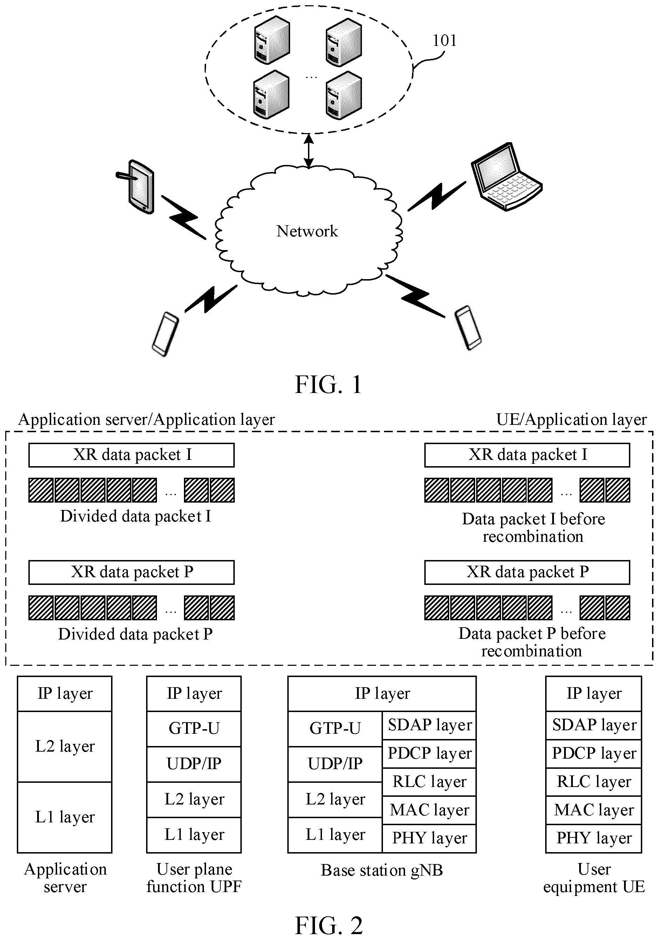

For example, in a cloud gaming scenario shown in FIG. 1, a cloud server 101 is configured to run a cloud game. The cloud server 101 may render a game picture, perform encoding processing on an audio signal and a rendered image, and finally transmit, to game clients through a network, encoded data obtained through the encoding processing. The game client may be user equipment (UE) with a basic streaming media playing capability, a human-computer interaction capability, and a communication capability, such as a smartphone, a tablet computer, a notebook computer, a desktop computer, a smart television, a smart home, an on-board terminal, or an aerial vehicle. Alternatively, the game client may be an application running in a terminal device. Specifically, the game client may decode the encoded data transmitted by the cloud server 101, to obtain analog audio and video signals, and play the analog audio and video signals.

FIG. 1 shows only an exemplary system architecture of a cloud gaming system, and does not limit a specific architecture of the cloud gaming system. For example, in another embodiment, the cloud gaming system may further include a back-end server for scheduling, and the like. In addition, the cloud server 101 may be an independent physical server, or may be a server cluster or distributed system including a plurality of physical servers, or may be a cloud server providing basic cloud computing services such as cloud services, cloud databases, cloud computing, cloud functions, cloud storage, network services, cloud communication, middleware services, domain name services, security services, content delivery networks (CDNs), and big data and artificial intelligence platforms. The game client and the cloud server 101 may be directly or indirectly connected through wired or wireless communication. This is not limited in this application.

In the foregoing various multimedia-based interactive service application scenarios, a multimedia data packet is huge and therefore needs to be split into a plurality of data packets for transmission. Specifically, as shown in FIG. 2, in a 5G system, a user plane mainly includes an application server (AS), a user plane function (UPF), a base station (next generation NodeB, gNB for short), and UE. For some typical service scenarios, transmission of a multimedia data packet is mainly in a downlink direction, for example, from the AS to the UPF, and then the multimedia data packet is sent to the UE by using the gNB. During transmission, the multimedia data packet (using an XR data packet as an example in FIG. 2) is split at an application layer of the AS. Data packets obtained through splitting are used as internet protocol (IP) packets and are transmitted from the AS to the UPF. The 5G system transmits the sub-data packets to the UE side through a protocol data unit (PDU) session. The UE side submits the sub-data packets upward level by level from a protocol stack and recombines the sub-data packets, to recover the multimedia data packet.

In the system shown in FIG. 2, an L1 layer is a physical layer, configured for ensuring that original data can be transmitted on various physical media; an L2 layer is a data link layer, and the data link layer provides a service for a network layer based on a service provided by the physical layer; an IP layer is the network layer, configured for implementing data transfer between two end systems; UDP stands for user datagram protocol; GTP-U stands for general packet radio service (GPRS) tunneling protocol-user plane; PHY stands for physical; MAC stands for media access control; RLC stands for radio link control; PDCP stands for packet data convergence protocol; and SDAP stands for service data adaptation protocol.

As described above, it is common for a multimedia service to divide a frame of multimedia data packet into a plurality of data packets for transmission. However, when these data packets are transmitted in a network, the network does not distinguish an association relationship between these data packets, so that it is not possible to refer to the association relationship to discard a packet in a network congestion case. In addition, it is not possible to learn whether these data packets are of equal importance and whether some lost data packets can be recovered. The lack of such information leads to the blindness of a network side in processing received data packets. Based on these problems, the embodiments of this application provides a new data processing solution, to enable an application function (AF) to interact with a core network element to process parameters related to a PDU set (that is, an associated service data packet set), directly or indirectly affecting generation of corresponding policies and rules and configuration of parameters in the core network, so that service data packets can be adapted to a network resource state and can be efficiently processed.

The implementation details of the technical solutions of the embodiments of this application are described in detail as follows:

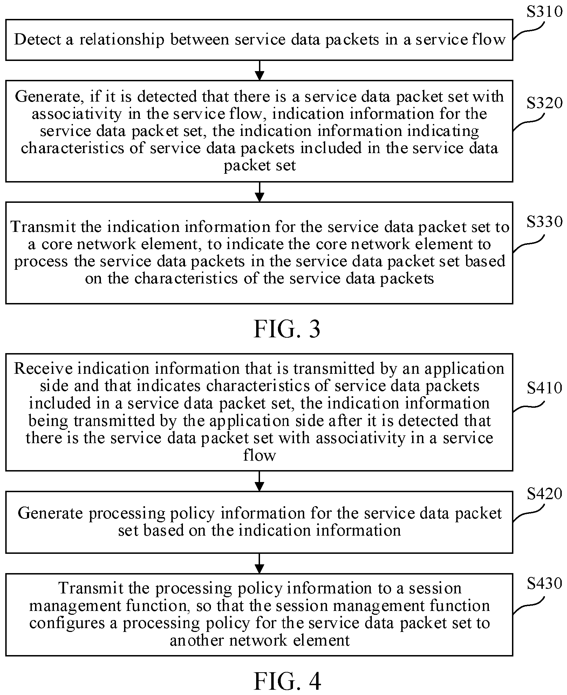

FIG. 3 is a flowchart of a data processing method according to an embodiment of this application. The data processing method may be performed by an application-side network element. The application-side network element is a network element at an application layer, for example, may be an AF. As shown in FIG. 3, the data processing method may include S310 to S330, which are described in detail as follows:
S310: Detect a relationship between service data packets in a service flow.

In this embodiment of this application, the relationship between the service data packets indicates whether there are service data packets with an association relationship in the service flow. For example, a large data packet is divided into several associated sub-data packets or a plurality of data packets for a same service.

In some optional embodiments, the relationship between the service data packets in the service flow may be detected by using encoding and decoding algorithms for the service data packets in the service flow. For example, if a service data packet is dependent on another service data packet for encoding or decoding, there is an association relationship between the two service data packets. Alternatively, if an association identifier is added to a group of service data packets during encoding, this group of service data packets have an association relationship, that is, this service data packet set has associativity. The associativity may be referred to as data packet associativity.

In some optional embodiments, the relationship between the service data packets in the service flow may be detected based on a service characteristic corresponding to the service flow. For example, if a service flow corresponds to a strongly interactive service, the service flow may include a service data packet set formed by a plurality of sub-data packets obtained by dividing a same large data packet, that is, the service data packets in the service data packet set have an association relationship.

In some optional embodiments, the relationship between the service data packets in the service flow may be detected based on the encoding and decoding algorithms for the service data packets in the service flow and the service characteristic corresponding to the service flow. For example, if a service flow corresponds to a strongly interactive service (for example, a compressed image data flow), and a service data packet in the service flow is dependent on another service data packet for encoding or decoding, there is an association relationship between these service data packets.

S320: Generate, if it is detected that there is a service data packet set with associativity in the service flow, indication information for the service data packet set, the indication information indicating characteristics of service data packets included in the service data packet set.

In some optional embodiments, the indication information for the service data packet set indicates that the service data packets in the service data packet set have an association relationship, that is, the service data packet set has associativity, and may also indicate at least one of the following information: whether the service data packets in the service data packet set are of equal importance, and whether corresponding content of the service data packet set is recoverable after some service data packets in the service data packet set are lost.

In some embodiments, whether the service data packets in the service data packet set are of equal importance indicates an importance degree between the service data packets in the service data packet set. For example, if the service data packets in the service data packet set are of equal importance, all of these service data packets cannot be lost during transmission. A packet loss may result in the inability to recover the corresponding content of the service data packet set. If the service data packets included in the service data packet set are of unequal importance, some of these service data packets cannot be lost. However, a loss of some service data packets may not affect recovery of the entire service data packet set, so that a service data packet with a low importance degree may be discarded in a network congestion case.

In some embodiments, whether the corresponding content of the service data packet set is recoverable after some service data packets in the service data packet set are lost indicates which service data packets in the service data packet set can be discarded in a network congestion case.

In some optional embodiments, the indication information for the service data packet set may indicate that the service data packets in the service data packet set have an association relationship and the service data packets in the service data packet set are of equal importance. In this case, all the service data packets in the service data packet set cannot be lost during transmission. If some service data packets are lost, all the service data packets in the service data packet set need to be discarded.

In some optional embodiments, the indication information for the service data packet set may indicate that the service data packets in the service data packet set have the association relationship and the service data packets in the service data packet set are of unequal importance, and indicate that the corresponding content of the service data packet set is recoverable after some service data packets in the service data packet set are lost. In this case, during transmission of all the service data packets in the service data packet set, a transmit end may recognize an importance degree of each service data packet, and may discard, in a network congestion case, some service data packets that do not affect recovery of the service data packet set.

In some optional embodiments, the indication information for the service data packet set may indicate that the service data packets in the service data packet set have the association relationship and the service data packets in the service data packet set are of unequal importance, and indicate that the corresponding content of the service data packet set is recoverable after some service data packets in the service data packet set are lost. In addition, the indication information may further indicate a packet loss policy of the service data packet set, and the packet loss policy indicates that transmission of a specified service data packet in the service data packet set is aborted in a network congestion case. In this case, during transmission of all the service data packets in the service data packet set, if there is network congestion, the specified service data packet in the service data packet set may be discarded based on the packet loss policy, so that an impact caused by the network congestion can be reduced without affecting recovery of the service data packet set.

In some optional embodiments, whether a service data packet is a discardable data packet may be indicated by user-plane header information. Specifically, the service data packets in the service data packet set further include user-plane header information, and the user-plane header information indicates whether a service data packet is a discardable data packet. In this case, during transmission of all the service data packets in the service data packet set, if there is network congestion, a corresponding service data packet may be discarded based on the user-plane header information of the service data packet, so that an impact caused by the network congestion can be reduced without affecting recovery of the service data packet set.

S330: Transmit the indication information for the service data packet set to a core network element, to indicate the core network element to process the service data packets in the service data packet set based on the characteristics of the service data packets.

In some optional embodiments, the core network element may be a policy control function (PCF). When the application-side network element (for example, the AF) sends the indication information to the PCF, a processing manner is that the application-side network element directly sends the indication information to the PCF, and another manner is that the application-side network element sends the indication information to a network exposure function (NEF) and then the NEF forwards the indication information to the PCF.

In some optional embodiments, the core network element may generate policy information for integration processing on the service data packets in the service data packet set if the indication information indicates that the service data packets in the service data packet set have the association relationship and the service data packets in the service data packet set are of equal importance. For example, if one service data packet in the service data packet set is discarded, all the service data packets need to be discarded.

In some optional embodiments, the core network element may generate policy information for importance recognition and differentiation processing on the service data packets in the service data packet set if the indication information indicates that the service data packets in the service data packet set have the association relationship and the service data packets in the service data packet set are of unequal importance. For example, if there is network congestion, a service data packet with a low importance degree may be discarded, to reduce an impact caused by the network congestion without affecting recovery of the service data packet set.

In some optional embodiments, the user-plane header information may be further added to the service data packets included in the service data packet set, the user-plane header information indicating a relationship between the service data packets included in the service data packet set; and then the service data packets with the user-plane header information added may be transmitted to a data receive end. According to the technical solution of this embodiment, the relationship between the service data packets may be indicated by the user-plane header information. For example, the association identifier is added to each service data packet in the service data packet set with associativity, to indicate the relationship between the service data packets. The association identifier may be, for example, same set identifier information, to indicate that these service data packets are related. Alternatively, the association identifier may be sequence number information of the service data packet, to indicate a sequence relationship between these service data packets.

The foregoing describes the technical solutions of the embodiments of this application from the perspective of the application-side network element. The following further describes implementation details of the technical solutions of the embodiments of this application from the perspective of the core network element (namely, the PCF):
FIG. 4 is a flowchart of a data processing method according to an embodiment of this application. The data processing method may be performed by a core network element, for example, may be performed by a PCF. As shown in FIG. 4, the data processing method may include S410 to S430, which are described in detail as follows:
S410: Receive indication information that is transmitted by an application-side network element and that indicates characteristics of service data packets included in a service data packet set, the indication information being transmitted by the application-side network element after it is detected that there is the service data packet set with associativity in a service flow.

In some optional embodiments, the indication information that indicates the characteristics of the service data packets included in the service data packet set may indicate that the service data packets in the service data packet set have an association relationship, and may also indicate at least one of the following information: whether the service data packets in the service data packet set are of equal importance, and whether corresponding content of the service data packet set is recoverable after some service data packets in the service data packet set are lost. For details, refer to the technical solution of the foregoing embodiment. Details are not described herein again.

S420: Generate processing policy information for the service data packet set based on the indication information.

In some optional embodiments, the core network element may generate policy information for integration processing on the service data packets in the service data packet set if the indication information indicates that the service data packets in the service data packet set have the association relationship and the service data packets in the service data packet set are of equal importance. For example, if one service data packet in the service data packet set is discarded, all the service data packets in the set need to be discarded.

In some optional embodiments, the core network element may generate policy information for importance recognition and differentiation processing on the service data packets in the service data packet set if the indication information indicates that the service data packets in the service data packet set have the association relationship and the service data packets in the service data packet set are of unequal importance. For example, if there is network congestion, a service data packet with a low importance degree may be discarded, to reduce an impact caused by the network congestion without affecting recovery of the service data packet set.

S430: Transmit the processing policy information to a session management function (SMF), so that the session management function configures a processing policy for the service data packet set to another network element.

In some optional embodiments, the SMF may generate, based on the received policy information, an N4 rule and UE context on a radio access network side (for example, an NG-radio access network (NG-RAN)) that are for reflecting the characteristics of the service data packets in the service data packet set, and then configure the N4 rule to a UPF and configure the UE context to a base station. In some embodiments, the SMF may generate a UE-side rule for reflecting the characteristics of the service data packets in the service data packet set, and then configure the UE-side rule to UE.

The foregoing describes the technical solutions of the embodiments of this application separately from the perspectives of the application-side network element and the core network element. Specifically, according to the technical solutions of the embodiments of this application, the application-side network element and the core network element can implement processing on the service data packet set with associativity through interaction, which can ensure that the processing on the service data packet set can be adapted to a network resource state, and helps improve efficiency of processing service data packets. The following further describes the implementation details of the technical solutions of the embodiments of this application by using specific embodiments:
In an embodiment of this application, the application-side network element may determine, based on at least one of encoding and decoding algorithms and a service characteristic, whether there is data packet associativity in a service flow, that is, whether there is a service data packet set with associativity.

For example, if a service data packet is dependent on another service data packet for encoding or decoding, there is an association relationship between the two service data packets. Alternatively, if an association identifier is added to a group of service data packets during encoding, this group of service data packets have associativity. In another example, if a service flow corresponds to a strongly interactive service (that is, a service characteristic is the strongly interactive service), the service flow may include a service data packet set formed by a plurality of sub-data packets obtained by dividing a same large data packet, that is, the service data packets in the service data packet set have an association relationship.

If there is no data packet associativity in a service flow, that is, there is no service data packet set with associativity, a data packet processing mechanism based on an associated data packet PDU set may not be started.

If there is data packet associativity in a service flow, that is, there is a service data packet set with associativity, such information may be indicated to a 5GC control-plane network element (for example, the PCF). The 5GC control-plane network element generates a corresponding policy and rule based on the indicated information, and configures the corresponding policy and rule to each network element.

In some embodiments, the application-side network element may include an AF. In this case, interaction between the application-side network element and the core network may be implemented through control-plane interaction between the AF and the 5GC (for a PDU session and a quality of service (QoS) flow). Based on this, the application-side network element may further include an AS, so that interaction may be implemented through a user plane between the AS and the UPF (for each data packet transmitted on the user plane).

In some embodiments, the content of the control-plane interaction between the application-side network element and the core network includes, but is not limited to: whether there is an associated data packet PDU set; whether service data packets in the PDU set are of equal importance if there is the associated data packet PDU set; and whether corresponding content of the PDU set is recoverable after some service data packets in the PDU set are lost if there is the associated data packet PDU set.

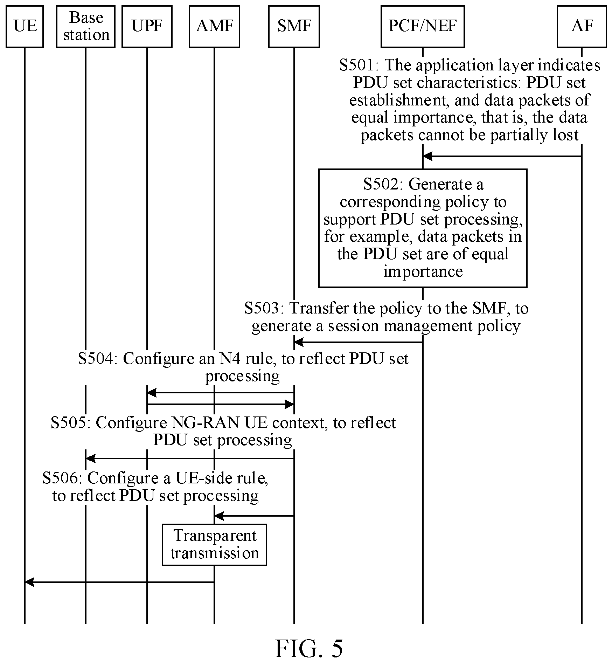

Based on the technical solution of the foregoing embodiment, as shown in FIG. 5, a data processing method according to an embodiment of this application includes the following operations:
S501: The application-side network element indicates PDU set characteristics: PDU set establishment, and data packets of equal importance, that is, the data packets cannot be partially lost.

Specifically, the application-side network element may include an AF. The AF may provide indication information for the PCF on a control plane (that is, may directly transfer the indication information to the PCF, or may first send the indication information to the NEF, and then the NEF forwards the indication information to the PCF). In addition, the application-side network element may also include an AS. The AS may provide user-plane header information to support PDU set recognition. For example, a corresponding parameter is added to the user-plane header information to indicate a relationship between service data packets included in a service data packet set. In this case, data packets inside the PDU set are of equal importance. If a data packet is discarded or times out, the other data packets inside the PDU set need to be discarded.

S502: The PCF generates a corresponding policy to support PDU set processing, for example, data packets in the PDU set are of equal importance.

Specifically, the PCF may perform mapping and generate the corresponding policy, including PDU set recognition, integration processing of the data packets in the PDU set, and other policies.

S503: The PCF transfers the generated policy to the SMF, to generate a session management policy.

Specifically, the SMF may further process the policy rule generated by the PCF, into an N4 rule for the UPF and a session management (SM) rule for the NG-RAN and the UE. The rules include PDU set recognition, integration processing of the data packets in the PDU set, and other policies.

S504: The SMF configures an N4 rule to the UPF, to reflect PDU set processing.

Specifically, the SMF interacts with the UPF and configures the N4 rule to the UPF through an N4 interface. After this operation, the UPF may be combined with a data packet header on a user-plane interface to perform PDU set recognition and data packet processing. For example, whether the data packets have associativity is determined based on the data packet header.

S505: Configure NG-RAN UE context, to reflect PDU set processing. To be specific, an SMF configuration parameter is transmitted to the NG-RAN by using an AMF, so that the base station obtains policies including PDU set recognition, and integration processing of the data packets in the PDU set.

S506: Configure a UE-side rule, to reflect PDU set processing. To be specific, an SMF configuration parameter is transmitted to the UE by using the AMF, so that the UE obtains policies including PDU set recognition, and integration processing of the data packets in the PDU set.

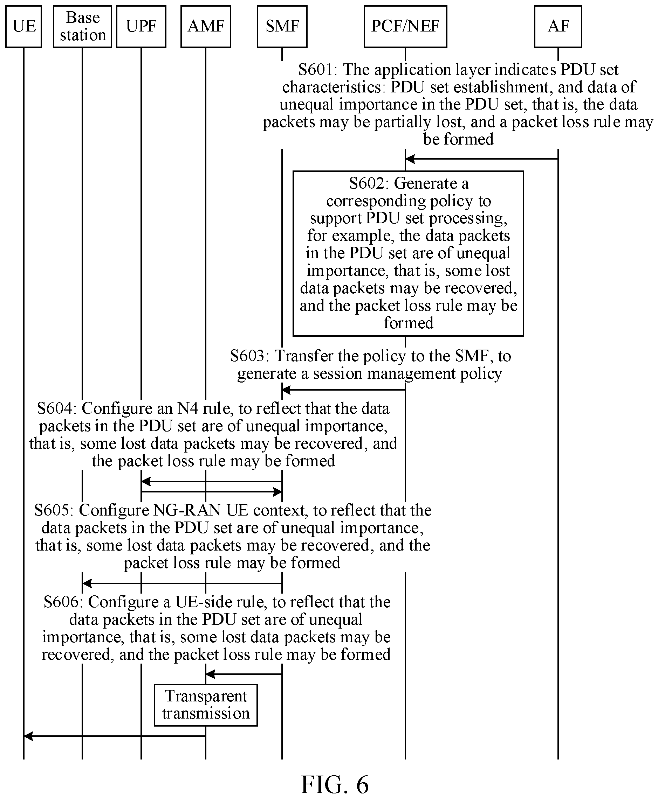

In the embodiment shown in FIG. 5, the AF indicates a processing solution in which the PDU set association is established and the data packets are of equal importance. With reference to FIG. 6, the following describes a processing solution, indicated by the AF, in which the PDU set association is established and the data packets are of unequal importance:

S601: The application-side network element indicates PDU set characteristics: PDU set establishment, and service data packets of unequal importance in the PDU set, that is, the service data packets may be partially lost, and a packet loss rule may be formed.

Specifically, the application-side network element may include an AF. The AF may provide indication information for the PCF on a control plane (that is, may directly transfer the indication information to the PCF, or may first send the indication information to the NEF, and then the NEF forwards the indication information to the PCF). In addition, the application-side network element may also include an AS. The AS may provide user-plane header information to support PDU set recognition. For example, a corresponding parameter is added to the user-plane header information to indicate a relationship between service data packets included in a service data packet set. In this case, as the data packets inside the PDU set are of unequal importance, discarding some service data packets does not affect recovery of the PDU set.

S602: The PCF generates a corresponding policy to support PDU set processing, for example, the data packets in the PDU set are of unequal importance, that is, the data packets may be partially lost, and the packet loss rule may be formed.

Specifically, the PCF may perform mapping and generate the corresponding policy, including PDU set recognition, and importance recognition and processing of the data packets in the PDU set.

S603: The PCF transfers the generated policy to the SMF, to generate a session management policy.

Specifically, the SMF may further process the policy rule generated by the PCF, into an N4 rule for the UPF and an SM rule for the NG-RAN and the UE. The rules include PDU set recognition, and importance recognition and processing (for example, the packet loss rule) of the data packets in the PDU set.

S604: The SMF configures an N4 rule to the UPF, to reflect PDU set processing.

Specifically, the SMF interacts with the UPF and configures the N4 rule to the UPF through an N4 interface. After this operation, the UPF may be combined with a data packet header on a user-plane interface to perform PDU set recognition and data packet processing. For example, whether the data packets have associativity is determined based on the data packet header, and which data packets are discardable may be determined.

S605: Configure NG-RAN UE context, to reflect PDU set processing. To be specific, an SMF configuration parameter is transmitted to the NG-RAN by using an AMF, so that the base station obtains policies including PDU set recognition, and importance recognition and processing (for example, the packet loss rule) of the data packets in the PDU set.

S606: Configure a UE-side rule, to reflect PDU set processing. To be specific, an SMF configuration parameter is transmitted to the UE by using the AMF, so that the UE obtains policies including PDU set recognition, and importance recognition and processing (for example, the packet loss rule) of the data packets in the PDU set. In addition, a transmission policy in a UE uplink direction may alternatively be configured reversely, for example, PDU set recognition, or importance recognition and processing (for example, the packet loss rule) of the data packets in the PDU set that is in an uplink transmission direction.

According to the technical solutions of the foregoing embodiments of this application, the application-side network element and the core network element can implement processing on the service data packet set with associativity through interaction, which can ensure that the processing on the service data packet set can be adapted to a network resource state, and helps improve efficiency of processing service data packets.

The following describes apparatus embodiments of this application, which may be applied for performing the data processing method in the foregoing embodiments of this application. For details undisclosed in the apparatus embodiments of this application, refer to the foregoing embodiments of the data processing method in this application.

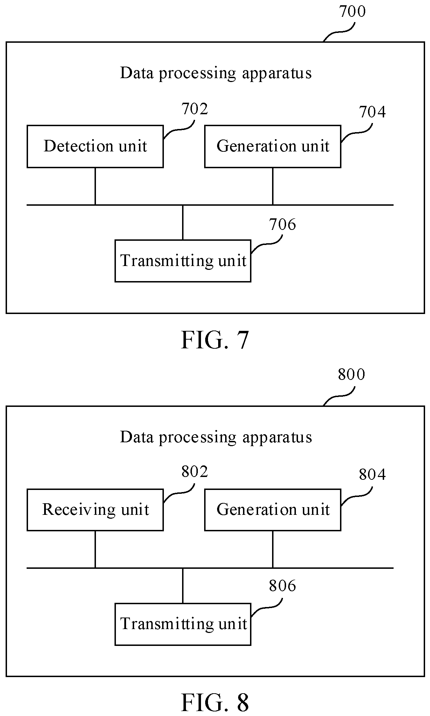

FIG. 7 is a block diagram of a data processing apparatus according to an embodiment of this application. The data processing apparatus may be configured in an application-side network element, for example, may be configured in an AF.

As shown in FIG. 7, a data processing apparatus 700 according to an embodiment of this application includes: a detection unit 702, a generation unit 704, and a transmitting unit 706.

The detection unit 702 is configured to detect a relationship between service data packets in a service flow. The generation unit 704 is configured to generate, if it is detected that there is a service data packet set with associativity in the service flow, indication information for the service data packet set, the indication information indicating characteristics of service data packets included in the service data packet set. The transmitting unit 706 is configured to transmit the indication information for the service data packet set to a core network element, to indicate the core network element to process the service data packets in the service data packet set based on the characteristics of the service data packets. The associativity indicates that the service data packets in the service data packet set have an association relationship.

In some embodiments of this application, based on the foregoing solution, the detection unit 702 is configured to detect the relationship between the service data packets in the service flow based on at least one of the following information: encoding and decoding algorithms for the service data packets in the service flow, and a service characteristic corresponding to the service flow.

In some embodiments of this application, based on the foregoing solution, the indication information indicates that the service data packets in the service data packet set have the association relationship, and indicates at least one of the following information: whether the service data packets in the service data packet set are of equal importance, and whether corresponding content of the service data packet set is recoverable after some service data packets in the service data packet set are lost.

In some embodiments of this application, based on the foregoing solution, the indication information indicates that the service data packets in the service data packet set have the association relationship and the service data packets in the service data packet set are of equal importance.

In some embodiments of this application, based on the foregoing solution, the indication information indicates that the service data packets in the service data packet set have the association relationship and the service data packets in the service data packet set are of unequal importance, and indicates that the corresponding content of the service data packet set is recoverable after some service data packets in the service data packet set are lost.

In some embodiments of this application, based on the foregoing solution, the indication information further indicates a packet loss policy of the service data packet set, and the packet loss policy indicates that transmission of a specified service data packet in the service data packet set is aborted in a network congestion case.

In some embodiments of this application, based on the foregoing solution, the service data packets in the service data packet set further include user-plane header information, and the user-plane header information indicates whether a service data packet is a discardable data packet.

In some embodiments of this application, based on the foregoing solution, the data processing apparatus further includes: a processing unit, configured to add the user-plane header information to the service data packets included in the service data packet set, the user-plane header information indicating a relationship between the service data packets included in the service data packet set. The transmitting unit 706 is further configured to transmit the service data packets with the user-plane header information added to a data receive end.

FIG. 8 is a block diagram of a data processing apparatus according to an embodiment of this application. The data processing apparatus may be configured in a core network element, for example, may be configured in a PCF.

As shown in FIG. 8, a data processing apparatus 800 according to an embodiment of this application includes: a receiving unit 802, a generation unit 804, and a transmitting unit 806.

The receiving unit 802 is configured to receive indication information that is transmitted by an application-side network element and that indicates characteristics of service data packets included in a service data packet set, the indication information being transmitted by the application-side network element after it is detected that there is the service data packet set with associativity in a service flow. The generation unit 804 is configured to generate processing policy information for the service data packet set based on the indication information. The transmitting unit 806 is configured to transmit the processing policy information to a session management function, so that the session management function configures a processing policy for the service data packet set to another network element.

In some embodiments of this application, based on the foregoing solution, the generation unit 804 is configured to: generate policy information for integration processing on the service data packets in the service data packet set if the indication information indicates that the service data packets in the service data packet set have the association relationship and the service data packets in the service data packet set are of equal importance.

In some embodiments of this application, based on the foregoing solution, the generation unit 804 is configured to: generate policy information for importance recognition and differentiation processing on the service data packets in the service data packet set if the indication information indicates that the service data packets in the service data packet set have the association relationship and the service data packets in the service data packet set are of unequal importance.

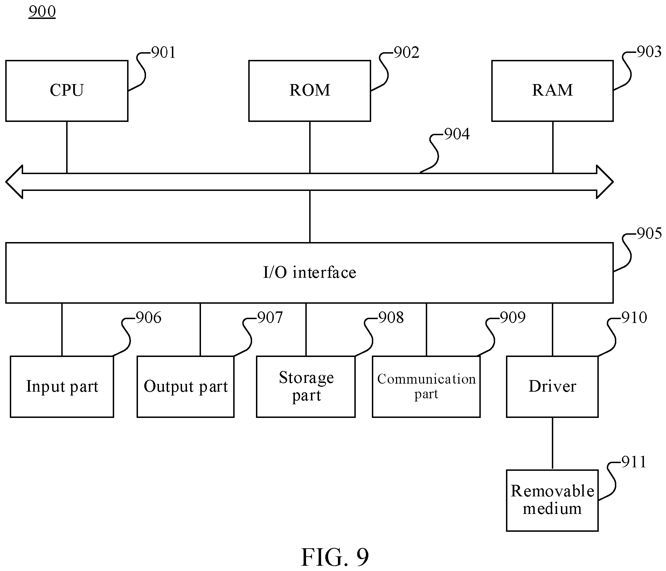

FIG. 9 is a schematic diagram of a structure of a computer system for implementing an electronic device according to an embodiment of this application.

A computer system 900 of an electronic device shown in FIG. 9 is merely an example, and does not constitute any limitation on functions and use ranges of the embodiments of this application.

As shown in FIG. 9, the computer system 900 includes a central processing unit (CPU) 901, which may perform various suitable actions and processing based on a program stored in a read-only memory (ROM) 902 or a program loaded from a storage part 908 into a random access memory (RAM) 903, for example, perform the methods in the foregoing embodiments. The RAM 903 further stores various programs and data required for system operations. The CPU 901, the ROM 902, and the RAM 903 are connected to each other by a bus 904. An input/output (I/O) interface 905 is also connected to the bus 904.

The following components are connected to the I/O interface 905: an input part 906 including a keyboard, a mouse, or the like; an output part 907 including a cathode ray tube (CRT), a liquid crystal display (LCD), a speaker, or the like; the storage part 908 including a hard disk or the like; and a communication part 909 including a network interface card such as a local area network (LAN) card or a modem. The communication part 909 performs communication processing through a network such as the Internet. A driver 910 is also connected to the I/O interface 905 as required. A removable medium 911, such as a magnetic disk, an optical disc, a magneto-optical disk, or a semiconductor memory, is mounted on the driver 910 as required, so that a computer program read from the removable medium is installed into the storage part 908 as required.

Particularly, according to an embodiment of this application, the foregoing processes described with reference to the flowcharts may be implemented as a computer software program. For example, an embodiment of this application includes a computer program product. The computer program product includes a computer program stored in a computer-readable medium. The computer program includes a computer program for performing the method shown in the flowchart. In such an embodiment, by using the communication part 909, the computer program may be downloaded and installed from a network, and/or installed from the removable medium 911. When the computer program is executed by the CPU 901, various functions defined in the system of this application are performed.

The computer-readable medium in the embodiments of this application may be a computer-readable signal medium, a computer-readable storage medium, or any combination thereof. The computer-readable storage medium may be, for example, but is not limited to, an electric, magnetic, optical, electromagnetic, infrared, or semi-conductive system, apparatus, or component, or any combination thereof. A more specific example of the computer-readable storage medium may include, but is not limited to: an electrical connection having one or more wires, a portable computer magnetic disk, a hard disk, a RAM, a ROM, an erasable programmable read-only memory (EPROM), a flash memory, an optical fiber, a portable compact disk read-only memory (CD-ROM), an optical storage device, a magnetic storage device, or any appropriate combination thereof. In this application, the computer-readable storage medium may be any tangible medium including or storing a program, and the program may be used by or used in combination with an instruction execution system, an apparatus, or a device. In this application, the computer-readable signal medium may include a data signal transmitted in a baseband or as part of a carrier, and stores a computer-readable computer program. A data signal transmitted in such a way may be in a plurality of forms, including, but not limited to, an electromagnetic signal, an optical signal, or any appropriate combination thereof. The computer-readable signal medium may be any computer-readable medium other than a computer-readable storage medium. The computer-readable medium may send, propagate, or transmit a program that is used by or used in combination with an instruction execution system, an apparatus, or a device. The computer program included in the computer-readable medium may be transmitted by using any suitable medium, including but not limited to: a wireless medium, a wired medium, or any suitable combination thereof.

The flowcharts and block diagrams in the accompanying drawings illustrate system architectures, functions, and operations that may be implemented by systems, methods, and computer program products according to various embodiments of this application. Each block in the flowcharts or block diagrams may represent a module, a program segment, or a part of code. The module, the program segment, or the part of code includes one or more executable instructions for implementing specified logical functions. In some alternative implementations, the functions marked in the blocks may occur in a sequence different from that marked in the accompanying drawings. For example, two consecutive blocks may actually be executed in parallel, and sometimes may be executed in a reverse order, depending on a function involved. Each block in the block diagrams or flowcharts, and a combination of blocks in the block diagrams or flowcharts may be implemented by using a dedicated hardware-based system configured to perform a specified function or operation, or may be implemented by using a combination of dedicated hardware and a computer program.

A related unit described in the embodiments of this application may be implemented in a software manner, or may be implemented in a hardware manner, and the described unit may alternatively be configured in a processor. Names of the units do not constitute a limitation on the units in a specific case.

According to another aspect, this application further provides a computer-readable medium. The computer-readable medium may be included in the electronic device described in the foregoing embodiments, or may exist alone and is not configured in the electronic device. The computer-readable medium carries one or more computer programs. When the one or more computer programs are executed by the electronic device, the electronic device implements the methods in the foregoing embodiments.

Although several modules or units of a device configured to perform actions are discussed in the foregoing detailed descriptions, such division is not mandatory. Actually, according to the implementations of this application, the features and functions of two or more modules or units described above may be embodied in one module or unit. On the contrary, the features and functions of one module or unit described above may be further divided to be embodied by a plurality of modules or units.

According to the foregoing descriptions of the implementations, a person skilled in the art may readily understand that the exemplary implementations described herein may be implemented by using software, or may be implemented by combining software and necessary hardware. Therefore, the technical solutions of the implementations of this application may be implemented in a form of a software product. The software product may be stored in a non-volatile storage medium (which may be a CD-ROM, a USB flash drive, a removable hard disk, or the like) or on a network, including several instructions for instructing a computing device (which may be a personal computer, a server, a touch terminal, a network device, or the like) to perform the methods according to the implementations of this application.

After considering the specification and practicing the disclosed implementations, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application.

This application is not limited to the precise structures described above and shown in the accompanying drawings, and various modifications and changes can be made without departing from the scope of this application. The scope of this application is subject only to the appended claims.

## Claims

1. A data processing method, performed by an application-side network element, and comprising:
detecting a relationship between service data packets in a service flow;
generating, if it is detected that there is a service data packet set with associativity in the service flow, indication information for the service data packet set, the indication information indicating characteristics of service data packets comprised in the service data packet set, and the associativity indicating that the service data packets in the service data packet set have an association relationship; and
transmitting the indication information for the service data packet set to a core network element, to indicate the core network element to process the service data packets in the service data packet set based on the characteristics of the service data packets.

2. The data processing method according to claim 1, wherein the relationship between the service data packets in the service flow is detected based on at least one of the following information:
encoding and decoding algorithms for the service data packets in the service flow, and a service characteristic corresponding to the service flow.

3. The data processing method according to claim 1, wherein the indication information indicates that the service data packets in the service data packet set have the association relationship, and indicates at least one of the following information:
whether the service data packets in the service data packet set are of equal importance, and whether corresponding content of the service data packet set is recoverable after some service data packets in the service data packet set are lost.

4. The data processing method according to claim 3, wherein the indication information indicates that the service data packets in the service data packet set have the association relationship and the service data packets in the service data packet set are of equal importance.

5. The data processing method according to claim 3, wherein the indication information indicates that the service data packets in the service data packet set have the association relationship and the service data packets in the service data packet set are of unequal importance, and indicates that the corresponding content of the service data packet set is recoverable after some service data packets in the service data packet set are lost.

6. The data processing method according to claim 5, wherein the indication information further indicates a packet loss policy of the service data packet set, and the packet loss policy indicates that transmission of a specified service data packet in the service data packet set is aborted in a network congestion case.

7. The data processing method according to claim 5, wherein the service data packets in the service data packet set further comprise user-plane header information, and the user-plane header information indicates whether a service data packet is a discardable data packet.

8. The data processing method according to any one of claims 1 to 7, further comprising:
adding the user-plane header information to the service data packets comprised in the service data packet set, the user-plane header information indicating a relationship between the service data packets comprised in the service data packet set; and
transmitting the service data packets with the user-plane header information added to a data receive end.

9. A data processing method, comprising:
receiving indication information that is transmitted by an application-side network element and that indicates characteristics of service data packets comprised in a service data packet set, the indication information being transmitted by the application-side network element after it is detected that there is the service data packet set with associativity in a service flow, and the associativity indicating that the service data packets in the service data packet set have an association relationship;
generating processing policy information for the service data packet set based on the indication information; and
transmitting the processing policy information to a session management function, so that the session management function configures a processing policy for the service data packet set to another network element.

10. The data processing method according to claim 9, wherein the generating processing policy information for the service data packet set based on the indication information comprises:
generating policy information for integration processing on the service data packets in the service data packet set if the indication information indicates that the service data packets in the service data packet set have the association relationship and the service data packets in the service data packet set are of equal importance.

11. The data processing method according to claim 9, wherein the generating processing policy information for the service data packet set based on the indication information comprises:
generating policy information for importance recognition and differentiation processing on the service data packets in the service data packet set if the indication information indicates that the service data packets in the service data packet set have the association relationship and the service data packets in the service data packet set are of unequal importance.

12. A data processing apparatus, comprising:
a detection unit, configured to detect a relationship between service data packets in a service flow;
a generation unit, configured to generate, if it is detected that there is a service data packet set with associativity in the service flow, indication information for the service data packet set, the indication information indicating characteristics of service data packets comprised in the service data packet set; and
a transmitting unit, configured to transmit the indication information for the service data packet set to a core network element, to indicate the core network element to process the service data packets in the service data packet set based on the characteristics of the service data packets.

13. A data processing apparatus, comprising:
a receiving unit, configured to receive indication information that is transmitted by an application-side network element and that indicates characteristics of service data packets comprised in a service data packet set, the indication information being transmitted by the application-side network element after it is detected that there is the service data packet set with associativity in a service flow;
a generation unit, configured to generate processing policy information for the service data packet set based on the indication information; and
a transmitting unit, configured to transmit the processing policy information to a session management function, so that the session management function configures a processing policy for the service data packet set to another network element.

14. A computer-readable medium, having a computer program stored therein, the computer program, when executed by a processor, implementing the data processing method according to any one of claims 1 to 11.

15. An electronic device, comprising:
one or more processors; and
a memory, configured to store one or more computer programs, the one or more computer programs, when executed by the one or more processors, causing the electronic device to implement the data processing method according to any one of claims 1 to 11.

16. A computer program product, comprising a computer program, the computer program being stored in a computer-readable storage medium, and a processor of an electronic device reading the computer program from the computer-readable storage medium and executing the computer program, to enable the electronic device to perform the data processing method according to any one of claims 1 to 11.
